# EUROPÄISCHE PATENTSCHRIFT

(11) **EP 1 003 022 B1**
(45) Veröffentlichungstag und Bekanntmachung des Hinweises auf die Patenterteilung: **11.09.2002**
(21) Anmeldenummer: 99122474.2
(22) Anmeldetag: 11.11.1999
(51) Int. Cl.: G01L 9/00, G01L 13/00, F27B 1/10

(54) **Differenzdruckmesseinrichtung zur Ermittlung des Drucks in einem Schachtofen**
Differential pressure detecting device for measuring the pressure in a shaft furnace
Capteur de pression différentielle pour mesurer la pression dans un four à cuve

(30) Priorität: 12.11.1998 DE 19852214
(43) Veröffentlichungstag der Anmeldung: 24.05.2000
(73) Patentinhaber: EKO Stahl GmbH, 15890 Eisenhüttenstadt (DE)
(72) Erfinder: Lorenz, Werner, 15890 Eisenhüttenstadt (DE)
(74) Vertreter: Wenzel, Klaus

(56) Entgegenhaltungen:
- CH-A- 610 647
- LU-A- 47 470
- GENTER, K. U.A.: "Messeinrichtungen zur direkten Erfassung des aktiven Hochofenzustandes - Teil 1: Messtechnik" STAHL UND EISEN, Bd. 103, Nr. 15-16, 1983, Seiten 753-758, XP000919093

## Beschreibung

Die Erfindung betrifft eine Differenzdruckmeßeinrichtung zur Ermittlung des Ofendruckes in einem Schachtofen, insbesondere in einem Hochofen.

Zur Überwachung des Schmelzprozesses in einem Schachtofen werden zahlreiche Meßeinrichtungen eingesetzt um einen möglichst gleichmäßigen Ofengang zu gewährleisten und sich anbahnende Störungen im Ofenprozeß rechtzeitig zu erkennen. Ein ruhiger Ofengang ist eine unentbehrliche Voraussetzung für eine hohe Schmelzleistung bei niedrigem Brennstoffeinsatz. Um die Schwankungen des Ofenganges, die hauptsächlich auf die chemische Zusammensetzung und physikalische Beschaffenheit des Möllers zurückzuführen sind, zu begrenzen, werden durch entsprechende Meßgeräte solche wesentlichen Prozeßwerte wie z.B. Heißwinddruck, Ofendruck, Windmenge, Gichtgasdruck, Gichtgastemperatur, Temperatur des Mauerwerks ständig erfaßt. Für eine ausreichende Durchgasung der Möllerstoffe ist der Ofendruck über die Schachthöhe eines Ofens eine wichtige Prozeßgröße zur Führung des Schmelzprozesses.
Zur Erfassung des Ofendruckes über die Schachthöhe ist es bekannt, in mehreren Sektionen über den Umfang eines Schachtofens und in mehreren Ebenen verteilt, Druckentnahmestellen zur Erfassung des Ofendruckes anzuordnen, deren Anzahl in Abhängigkeit von der Größe eines Ofens festgelegt wird.
Gemäß einer Veröffentlichung in Stahl und Eisen 103(1983) Nr. 15-16 Seiten 755 bis 756 bestehen die Druckentnahmestellen aus einzelnen Rohren, welche vom Ofeninneren zum Ofenäußeren zwischen dem Mauerwerk eines Schachtofens, den Kühlplatten und den Ofenpanzer hindurch geführt werden und über eine Druckleitung mit einem Meßwertumformer verbunden sind. Die Messstellen sind gemäß dieser Druckmesseinrichtung über die Ofenhöhe angeordnet und geben. Messergebnisse aus dem unmittelbaren Wandbereich wieder.
Es hat sich im laufendem Ofenbetrieb herausgestellt, daß sich die verwendeten Druckentnahmestellen durch Ablagerungen im Rohrquerschnitt zusetzen und die einzelnen Druckentnahmestellen nachfolgend ausfallen, womit eine sichere Ofenführung nicht mehr gegeben ist.
Die Funktionsfähigkeit der einzelnen Druckentnahmestellen kann regelmäßig erst im Verlauf eines Ofenstillstandes durch aufbohren der Rohre hergestellt werden. Diese aufwendigen Arbeiten sind jedoch nur von kurzzeitigem Erfolg, da die Rohrquerschnitte nach kurzer Betriebszeit des Ofens wieder durch Ablagerungen aus dem Ofeninneren zugesetzt sind.
Nachteil dieser bekannten und angewandten Lösung ist, daß eine sichere Erfassung des Ofendruckes über einen längeren Ofenbetrieb nicht möglich ist und zusätzliche Aufwendungen zur Sicherstellung der Funktionsfähigkeit der Meßeinrichtung notwendig sind.
Gemäß der CH-Patentschrift 610 647 ist eine Druckmessung für einen Schachtofen bekannt, mit der in einem bestimmten Bereich des Schachtofens eine Strömungsumkehr gewährleistet werden soll. Dazu werden Regler eingesetzt, deren Regelgrößen die auf Null zu haltenden Druckdifferenzen zwischen den Druckmessöffnungen am Übergang von der Brennzone in die Kühlzone und am Übergang von der Vorwärmzone in die Brennzone eines Schachtofens sind.

Aufgabe der Erfindung ist es eine Lösung zu finden, mit der eine sichere Messung des Ofendruckes in einem Schachtofen, insbesondere in einem Hochofen, während dessen gesamten Betriebszeit möglich ist und die mit einer störungs- und wartungsfreien Druckentnahme in den einzelnen Sektionen und Ebenen eines Ofens arbeitet.

Erfindungsgemäß wird die Aufgabe durch die in den Ansprüchen 1 bis 2 beschriebene Einrichtung gelöst.

Es wurde überraschend gefunden, daß in den Schutzkästen bzw. Schutzrohren für die Rohrdurchführungen von Kühlplatten eines Hochofens oder eines anderen vergleichbaren Schachtofens ein Druck anliegt, der dem Ofeninnendruck in diesem Bereich des Schachtofens entspricht und diese Schutzkästen bzw. Schutzrohre auf Grund ihrer konstruktiven Ausgestaltung eine sichere und wartungsfreie Druckentnahme ermöglichen.
Die Gasdurchlässigkeit der an der Innenseite eines Ofenschachtes verwendeten Materialien gewährleistet eine verzögerungsfreie, dem aktuellen Ofeninnendruck entsprechende Meßwerterfassung bei gleichzeitiger Abschirmung der Druckentnahmestelle vor Ablagerungen und Verunreinigungen, die eine störungsfreie Meßwerterfassung beeinträchtigen oder ganz unmöglich machen können.
Die Zuverlässigkeit des erfaßten Meßwertes wird durch eine übliche konstruktive Anordnung eines auf der Innenseite mit dem Ofenpanzer verschweißten Flacheisens begünstigt, welches ringförmig am Ofeninneren des Ofenpanzers befestigt ist und einen Druckausgleich zwischen zwei übereinander angeordneten benachbarten Kühlplatten verhindert, so daß ein Druckausgleich stets nur zum Ofeninneren möglich ist, womit eine sichere, der jeweiligen Lage der Druckentnahmestelle entsprechende Meßwerterfassung gegeben ist.

Nachfolgend soll die erfindungsgemäße Einrichtung an einem Ausführungsbeispiel näher erläutert werden.

### In den dazugehörenden Zeichnung zeigt

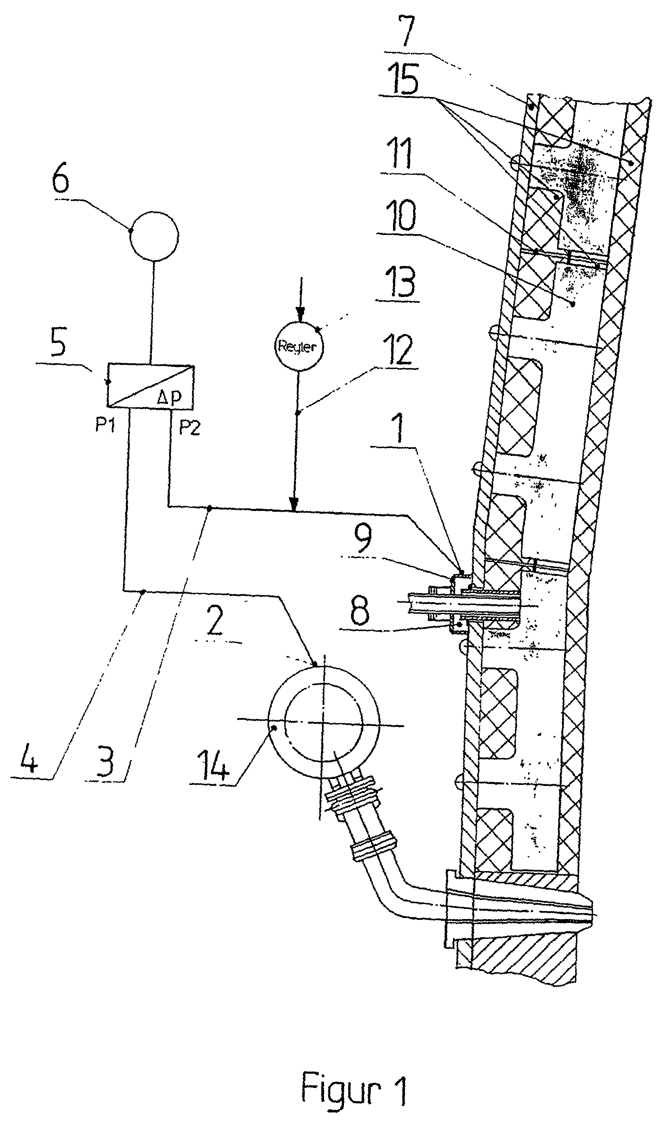

- Fig. 1 :: Gesamtansicht der Einrichtung

Das Ausführungsbeispiel bezieht sich auf die Ausgestaltung der Einrichtung für einen Hochofen mittlerer Größe bei dem in 4 Sektionen und 6 Ebenen der Ofeninnendruck gemessen werden soll. Dazu sind insgesamt 24 Druckentnahmestellen 1 an ausgewählten, an der Außenseite eines Ofenpanzers angeordnete, Schutzkästen 9 befestigt. Jeder Schutzkasten 9 ist gasdicht mit dem Ofenpanzer 7 verbunden und umschließt eine zylinderförmige Öffnung im Ofenpanzer 7 .
Durch diese Öffnungen im Ofenpanzer 7 werden die Rohre zur Versorgung der Kühlplatten 10 mit Kühlflüssigkeit geführt, wobei die Rohre üblicherweise im Bereich des Ofenpanzers 7 mit einem Schutzrohr versehen sind, deren Außendurchmesser kleiner als der Durchmesser der Öffnung im Ofenpanzer 7 ist. Über diese verbleibende ringförmige und sich über die gesamte Wandstärke des Ofenpanzers 7 sich erstreckende Öffnung besteht eine Verbindung vom durch den Schutzkasten 9 gebildeten Hohlraum 8 und dem Ofeninneren, wobei durch die praktizierte Anordnung der Kühlplatten 10 an der Innenseite des Ofenpanzers 7 und die verwendeten FF - Materialien 15 ein solche Gasdurchlässigkeit vorhanden ist, daß der im Ofeninneren vorhandene aktuelle Ofendruck sich im Hohlraum 8 einstellt und gemessen werden kann.
Die Kühlplatten 10 sind bekannterweise durch entsprechend breite Fugen voneinander getrennt und mit FF- Material 15, wie FF-Beton, Stampfmasse und Mauerwerk umgeben, wobei in der horizontalen Fuge zwischen zwei benachbarten, übereinander angeordneten Kühlplatten 10 und ein am Ofenpanzer 7 um den gesamten inneren Durchmesser des Ofenschachtes verlaufendes und mit dem Ofenpanzer 7 verschweißtes Flacheisen 11 sich befindet. Diese Ausgestaltung im Bereich des Ofenschachtes ermöglicht eine ausreichende Gasdurchlässigkeit und somit eine Druckübertragung bis in die außerhalb des Ofens angeordneten Schutzkästen 9 ohne das zusätzliche in die Ofenausmauerung eingebrachte und bis in den Bereich der Schüttung reichende Bohrungen erforderlich sind. Die verwendeten FF-Materialien 15 wirken bei der Übertragung des Ofendrucks dabei wie ein Filter, wodurch ein Zusetzen der Druckentnahmestellen 1, welche vorzugsweise in der oberen Hälfte des Schutzkastens 9 angeordnet, nicht eintritt. Durch die Anordnung des Flacheisens 11 wird ein Druckausgleich an der Rückseite zweier benachbarter Kühlplatten 10 in vertikaler Richtung unterbunden und somit eine der jeweiligen Schachthöhe entsprechende aktuelle Meßwerterfassung gewährleistet.

Die Druckentnahmestelle 1 ist über eine Druckleitung 3 zur Übertragung des im Schutzkasten 9 anliegenden Druckes p₂, der dem Ofendruck in diesem Bereich des Ofens entspricht, mit einem Meßwertumformer 5 verbunden, wobei die Druckleitung 3 vorzugsweise über ein Absperrventil mit der Druckentnahmestelle 1 verbunden ist. Der Meßwertumformer 5 steht über eine weitere Druckleitung 4 mit einer an der Heißwindleitung 14 des Hochofens angeordneten Druckentnahmestelle 2 in Verbindung und bildet aus den beiden anliegenden Meßwerten p₁ und p₂ einen Differenzwert Δp, der in ein elektrisches Signal umgewandelt und von einem nachgeordneten Display 6 zur Anzeige gebracht wird.

Die Druckleitung 3 ist mit einer weiteren Druckleitung 12 verbunden über die unter Verwendung eines Reglers 13 ein gasförmiges Medium wie z.B. Preßluft oder Stickstoff zu Freihaltung der Druckleitung 3 und der Druckentnahmestelle 1 zugeführt wird. Die eingesetzte Menge an dem verwendeten gasförmigen Medium liegt vorzugsweise zwischen 10 bis 20 l/h.

### Aufstellung der verwendeten Bezugszeichen

- 1 , 2: Druckentnahmestelle
- 3 ,4: Druckleitung
- 5: Meßwertumformer
- 6: Anzeigedisplay
- 7: Ofenpanzer
- 8: Hohlraum
- 9: Schutzkasten
- 10: Kühlplatte
- 11: Flacheisen
- 12: Druckleitung
- 13: Regler
- 14: Heißwindleitung
- 15: FF - Material

## Patentansprüche

1. Differenzdruckmeßeinrichtung zur Ermittlung des Ofendruckes in einem Schachtofen, insbesondere in einem Hochofen, bestehend aus Druckentnahmestellen (1,2), die über Druckleitungen (3,4) mit jeweils einem Meßwerturmformer (5) verbunden sind und dem zur Anzeige des ermittelten Differenzdruckes Δp, der aus dem Differenzdruck einer jeden Druckentnahmestelle am Ofenpanzer und der Heißwindleitung gebildet wird, ein Anzeigedisplay (6) zugeordnet ist, **dadurch gekennzeichnet, daß** die Druckentnahmestellen (1) zur Ermittlung des Ofendruckes p₂ in den einzelnen Sektionen und Ebenen eines Schachtofens an ausgewählten an der Außenseite des Ofenpanzers (7) angeordneten und einen gasdichten Hohlraum (8) bildenden Schutzkästen oder Schutzrohren ( 9) für die Rohrdurchführungen der Kühlplatten (10) befestigt sind.

2. Differenzdruckmeßeinrichtung nach Anspruch 1, **dadurch gekennzeichnet, daß** die von der Druckentnahmestelle (1) zum Meßwertumformer (5) führende Druckleitung (3) mit einer Druckleitung (12) in Verbindung steht, die über einen Regler (13) mit einer Druckleitung, über die ein gasförmiges Medium wie z.B. Druckluft oder Stickstoff zugeführt wird, verbunden ist.

## Claims

1. Differential pressure measuring device for determining the furnace pressure in a shaft furnace, in particular a blast furnace, comprising pressure tapping points (1, 2), which are connected via pressure lines (3, 4) to a measuring transducer (5) in each case and to which an indicating display (6) is assigned for indicating the determined differential pressure Δp, which is formed from the differential pressure of each pressure tapping point on the furnace shell and the hot-blast line, **characterized in that** the pressure tapping points (1) for determining the furnace pressure p₂ in the individual sections and levels of a shaft furnace are fastened to selected protective cases or protective tubes (9) arranged on the outside of the furnace shell (7) to form a gastight hollow space (8) for the pipe bushings of the cooling plates (10).

2. Differential pressure measuring device according to Claim 1, **characterized in that** the pressure line (3) leading from the pressure tapping point (1) to the measuring transducer (5) is in connection with a pressure line (12) which is connected via a controller (13) to a pressure line via which a gaseous medium, such as compressed air or nitrogen for example, is supplied.

## Revendications

1. Capteur de pression différentielle pour mesurer la pression dans un four à cuve, en particulier dans un haut fourneau, se composant de points de prise de pression (1, 2) qui sont connectés par le biais de conduites de pression (3, 4) à chaque fois à un convertisseur de signaux (5) auquel est associé un écran d'affichage (6) pour l'affichage de la pression différentielle Δp déterminée formée à partir de la pression différentielle d'un de chaque point de prise de pression au niveau du blindage du four et de la conduite à vent chaud, **caractérisé en ce que** les points de prise de pression (1) pour déterminer la pression du four p₂ dans les sections et les plans individuels d'un four à cuve sont fixés sur des boîtes protectrices ou des tubes protecteurs (9) pour les passages tubulaires sélectionnés des boîtes de refroidissement plates (10), disposés sur le côté extérieur du blindage du four (7) et formant un espace creux étanche aux gaz (8).

2. Capteur de pression différentielle selon la revendication 1, **caractérisé en ce que** la conduite de pression (3) conduisant depuis le point de prise de pression (1) au convertisseur de signaux (5) est connectée à une conduite de pression (12) qui est connectée par le biais d'un régulateur (13) à une conduite de pression par le biais de laquelle un milieu gazeux tel que par exemple de l'air comprimé ou de l'azote est acheminé.
